# EUROPEAN PATENT APPLICATION

(11) **EP 1 936 058 A1**
(43) Date of publication of application: **25.06.2008**
(21) Application number: 06077280.3
(22) Date of filing: 20.12.2006
(51) Int. Cl.: E04D 5/10, G01B 11/16

(54) **Sheet of bituminous material and method of manufacturing a sheet of bituminous material**

(71) Applicant: ESHA Group B.V., 9744 TC Groningen (NL)
(72) Inventor: Zandvoort, Frits, 9628 AH Siddeburen (NL)
(74) Representative: van Loon, C.J.J.

(57) **Abstract**

The invention relates to a sheet of bituminous material (1) for use as a cover, for example as a pavement (100), or as a membrane to prevent passage of fluids, such as a roofing material (200), or a waterproofing material of a water control-structure (300). The sheet (1) comprises at least one data channel (2,3), at least partially embedded in the bituminous material. The data channel (2,3) has at least one end which is provided with a data input/output (20,21,30,31). The data input/output (20,21,30,31) can be used to connect the data channel (2,3) to a data input/output of another data channel in for example an adjacent sheet of bituminous material, a data generator (4,5) and/or a data processor (6,7) to provide data with information about the condition of the bituminous material, and/or to transport other data.

## Description

### TECHNICAL FIELD AND BACKGROUND ART

The invention relates to a sheet of bituminous material for use as a cover, for example as a pavement, or as a membrane to prevent passage of fluids, such as a roofing material, or a waterproofing material of a water control-structure. Such a sheet is known form the British patent publication GB 1041796.

The usage of bitumen as a cover material is known from the art. Bitumen is for example used as a roofing material, as pavement, and to waterproof dikes, water basins and the like water control-structures. Bitumen can be provided in bulk, or for example in sheets in roll form.

When bitumen is applied in a sheet like-form it is commonly laminated with a carrier material. Woven or non-woven fiber tissue, or a metal wire netting can for example be used as a carrier material. The carrier material provides reinforcement against for example rupture of the sheet of bituminous material. The carrier can be used as a base on which a layer of bituminous material is to be formed, or it can be applied to an already formed layer of bituminous material. In the finished sheet of bituminous material, the carrier can be situated in the middle of the sheet, or near or at the surface of the sheet. Also, more than one layer of carrier material can be applied. For example British patent publication GB 1 041 496 discloses a use of bituminous material in sheet form in which the bituminous material has an inner portion comprising woven glass fiber tissue.

Bitumen may be used in different applications and additives can be used to adjust the bituminous material for specific applications. For example, while in roofing bitumen is used with a compact structure which inhibits permeation of water through the layer, for paving roads for example road-metal or gravel can be added to create asphalt, providing a deformation resistant, durable surfacing material. Also, by for example adding a granulate of uniform dimensions, a heavy and thick layer with an open structure can be provided which allows water to permeate through the layer of bituminous material.

A commonly known application of bulk bitumen is to provide a protective layer against heavy loads, such as traffic when applied as a road surface. A commonly known application of sheets of bituminous material is as an isolating material, for example for protection against weather conditions on a roof or for protection against leakage of acids and gasses in a landfill. Therefore, sheets of bituminous material are generally exposed to severe conditions.

In most situations failure or even wear of a sheet of bituminous material can lead to excessive damage, for example traffic accidents due to the loss of grip of cars on the road, or damage due to leakage of a roof. Because the material is often used under severe conditions and/or in places that can not be easily reached for inspection, it is very difficult or even impossible to inspect and/or collect information about the condition of the bituminous material or the surrounding environment. Frequent inspections of the material are therefore costly or even impossible, and damage of the bitumen due to for example wear is often only noticed when the bituminous material has already failed.

### SUMMARY OF THE INVENTION

It is an object of the invention to enable obtaining information about the loading conditions of a bituminous material and/or the environment of the bituminous material in a less difficult manner. In order to achieve this object, according to a first aspect of the present invention, a sheet of bituminous material according to claim 1 is provided.

The at least one input/output of the data channel is connectable with, for example, a data generator in the form of a sensor, for example a moist sensor or a pressure sensor, and/or a data processor for analyzing data transported by the data channel. Furthermore, the input/output may also be connected with the input/output of another data channel.

The data channel may be used to transport data that provides information about the condition of the bitumen and/or the conditions in or around the sheet of bituminous material. The data can be transported, for example, to a place easy accessible for processing and/or inspection. Accordingly, information about the condition of the bitumen and/or the conditions in or around the sheet of bituminous material can be obtained in a less difficult manner.

Furthermore, by using a pro-active approach, via a telemetrical technique and for example a real-time sensing technique, intervention is possible before the actual damage has occurred.

An additional advantage that may be obtained is that the sheet of bituminous material and the at least one data channel can be applied simultaneously because the data channel is embedded in the sheet of bituminous material before the sheet is applied to, for example, a roof. The need for an extra installation procedure on the spot when applying the sheet of bituminous material is therefore obviated. Accordingly, the time required and the risk involved are reduced. This is especially advantageous in potentially dangerous applications, such as for example when the sheet of bituminous material is applied to freeways, rooftops, submerged structures, and the like.

Also, the input/outputs of the data channel can be connected with another data channel for covering a distance or setting up a data network. Accordingly, the infrastructure of a data network can be provided simultaneously with the application of the sheet of bituminous material. For example, when providing pavement in a housing area, data channels for a Wide Area Network (WAN) can be provided simultaneously or data channels for a Local Area Network (LAN) can be provided together with a cover of a roof.

In an alternative embodiment of the invention, a sensor is embedded, for example during the production process of the sheet, in the sheet of bituminous material, for monitoring the conditions within the sheet of bituminous material. By monitoring the conditions within the sheet of bituminous material, instead of the conditions of the environment of the sheet of bituminous material, a direct insight in the condition of the sheet of bituminous material itself is provided. Furthermore, the sensor can be applied simultaneously with the sheet of bituminous material, and accordingly in a less difficult manner.

In an embodiment of the invention, the at least one data channel has a data propagation property which depends on a condition within the sheet of bituminous material. Analyzing changes in the data send through the data channel provides information about conditions in the sheet of bituminous material. In this way the data channel itself can be used as a sensor. Thus, a relatively large area is monitored in a simple and inexpensive manner.

In an embodiment of the invention, the refractive index of the data channel changes with a change in the condition, such as the humidity or the pressure exerted on the data channel.

Alternatively, for measuring changes in the length of an optical fiber data channel, the optical fiber data channel may be provided with fiber gratings. Thus designed, only one input/output is needed for both entering data into the data channel and for getting data transported by the data channel out of the data channel for, for example, processing. The data channel itself, however, when subjected to deformation, will show light damping through scattering. These effects can be qualified and quantified by using different filtering algorithms. The most common system used is called Distributed Temperature Sensing (DTS) for which even standard (operational) data fibers can be used. One technique to increase resolution is to apply gratings on set distances or exact places to be measured. In this text, the Bragg grating is taken as an example. Other examples of gratings are distributed Bragg reflectors and Long Period Fiber Gratings (LPFG).

When applying fiber gratings, the core of the optical fiber data channel is adapted by periodically varying the refractive index of the fiber core along the length of the optical fiber. Uniformly spaced regions in the fiber are created where the refractive index has been raised from that of the rest of the core. These variations scatter light by various effects, for instance the Bragg effect. When light is sent through the data channel, each time the light hits a region of higher refractive index, some light is scattered backwards. Therefore, one end of the data channel can be used both for data input and data output.

The application of fiber gratings is also advantageously for use with data channels with two or more ends. When a sheet of bituminous material is for example provided with a data channel with two ends, each provided with an input/output, and in which channel there is a fracture, data generated at one end can no longer be processed at the other end. However, when the data channel is provided with fiber gratings, the parts of the data channel between the data input outputs and the fracture can still be used for measuring the condition of the sheet of bituminous material by providing both input/outputs with a data generator and a data processor.

According to a second aspect of the invention a roof according to claim 15 is provided. According to a third aspect of the invention a prefabricated roof panel for constructing a roof according to claim 16 is provided. According to a fourth aspect of the invention a road according to claim 17 is provided. According to a fifth aspect of the invention a prefabricated road surface for constructing a road according to claim 18 is provided. According to a sixth aspect of the invention a water control structure according to claim 19 is provided. According to an eighth aspect of the invention a method according to claim 20 is provided.

Particular embodiments of the invention are set forth in the dependent claims. Further aspects, effects and details of the invention are set forth in the detailed description with reference to examples of which some are shown in the schematic drawings.

### BRIEF DESCRIPTION OF THE DRAWINGS

Further details, aspects and embodiments of the invention will be described, by way of example only, with reference to the drawings.
Fig. 1 shows a schematic top view of a sheet of bituminous material provided with two data channels;
Fig. 2 shows a schematic side view in section of the sheets of bituminous material of figure 1;
Fig. 3 shows a schematic top view of a sheet of bituminous material provided with six data channels.
Fig. 4 shows a schematic top view of a number of sheets of bituminous material forming a data network,
Fig. 5 shows a schematic side view in section of a sheet applied as a road service,
Fig. 6 shows a schematic perspective view of a sheet of bituminous material applied on a roof,
Fig. 7 shows a side view in section of a sheet of bituminous material applied in a water control structure,
Fig. 8 shows a diagram of a method for producing a sheet of bituminous material,
Fig. 9 shows a diagram of a method for implementing a sheet of bituminous material provided in roll form, and
Fig. 10 shows a perspective view of a roll of a sheet of bituminous material.

### MODES FOR CARRYING OUT THE INVENTION

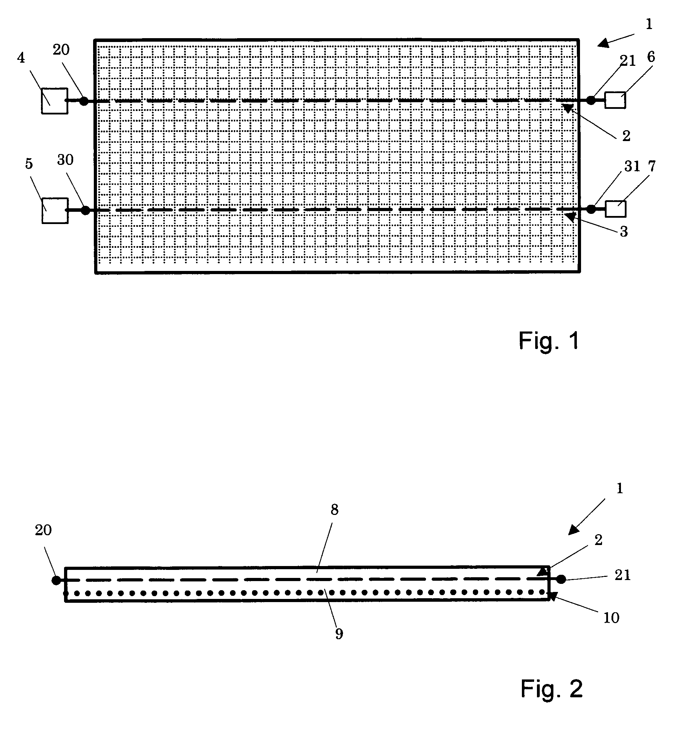

Figure 1 schematically shows a top view of an exemplary embodiment, comprising a sheet 1 of bituminous material provided with a first and a second data channel 2,3. In this example, the sheet 1 has an elongated, rectangular shape and the data channels 2,3 extend in the longitudinal direction of the sheet 1. The data channels 2,3 are embedded in the sheet 1. In this example, the data channels are embedded in a layer 8 of bituminous material. The layer 8 is provided on top of a supporting layer 9 comprising a carrier 10 of, for example, woven fiber material, as is explained below in more detail.

The data channels 2,3 have opposite ends. Each end is provided with a data input/output 20,21,30,31. As shown in fig. 1, the data channel 2,3 is connectable with an input/output, for the input of data into the data channel, to, for example, a respective data generator in the form of a sensor 4,5 and, for the output of data from the data channel, to a data processor 6,7 for analyzing the data from the sensor 4,5.

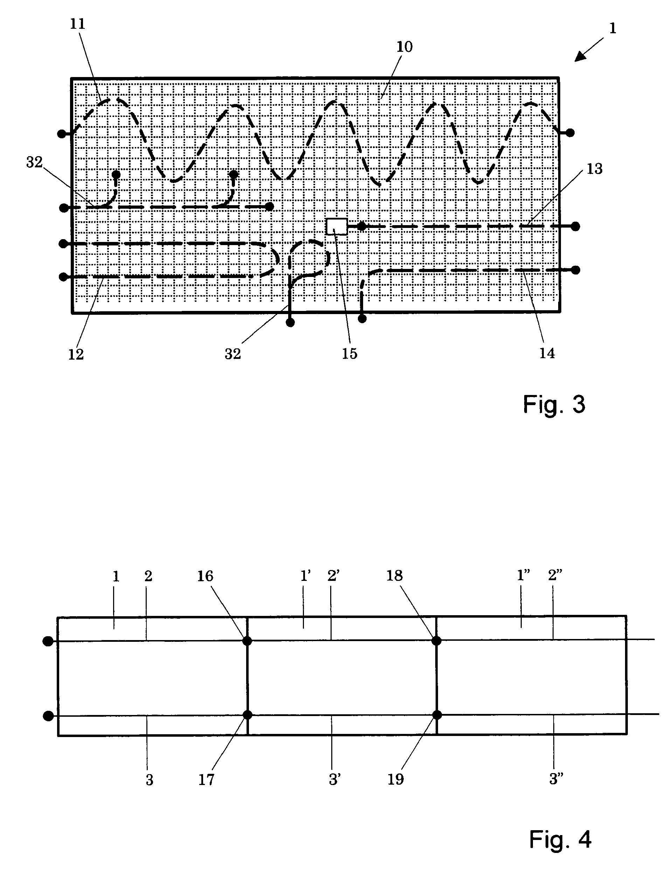

In another embodiment, shown in fig. 3, the data input/output of a data channel 13 is situated within the sheet 1 for connection with an embedded sensor 15. Such a sensor 15 can for example be integrated with the sheet 1 during the fabrication process. Alternatively, the sensor can also be integrated in the data channel. Furthermore, an embedded data input/output can also be connected with an embedded data processor which for example by way of wireless communication is connected with a monitoring station for monitoring the condition of the sheet of bituminous material.

Also, a data channel can be connected with a respective data input/output to another data channel for covering a distance or setting up a data network. In fig. 4 a number of sheets 1,1',1" is shown of which the data channels 2,3;2',3';2",3" are connected at nodes 16-19. Thereby, data can be transmitted over a plurality of sheets 1,1',1" or exchanged between sheets 1,1',1".

Besides using a sensor 4,5 as shown in Fig. 1, the data channel 2,3 itself can have a data propagation property which depends on a condition within the sheet 1 of bituminous material. Changes in the data propagation of the data channel 2,3 can be linked to changes of the data channel 2,3 itself. For example, the weight of someone walking over a sheet 1 of bituminous material (temporarily) transforms the sheet 1 and stretches the data channel 2,3 embedded in the sheet 1. The elongation of the data channel changes the data propagation characteristics of the data channel 2,3 and thus, temporarily, changes the data carried by the data channel 2,3. These changes in the data channel 2,3 can be identified for example by comparing data sent through the elongated data channel 2,3 with data sent through an unstretched data channel, the so-called bench mark data. The changes in the data can be linked by a data processor 6,7 to a load applied upon the data channel 2,3, and thus upon the sheet 1 of bituminous material, to provide extra information to a person monitoring the condition of the sheet bituminous material.

Optionally the sheet 1 of bituminous material includes a transmission sensor connected to the data channel for determining a change in the data propagation property. Thus, no separate analysis of the data transported through the data channel is needed for determining a change in the data propagation property of the data channel.

In a preferred embodiment the data channel 2,3 comprises optical fibers. The use of fibers, for example glass or polymer fibers, in combination with monochromatic or polychromatic light provides a data channel 2,3 which can be used as a very accurate measuring device. Due to the small wavelength of laser light, already small changes in the length of the data channel 2,3 can be registered by a shift in the interference pattern of the light beam that traveled through the data channel 2,3. Thus, for example, when used as roofing material, it is possible to detect someone walking over the sheet 1 of bituminous material by the minute changes in the length of the data channel 2,3 caused by the weight of the person pressing down on it.

Alternatively, for measuring changes in the length of an optical fiber data channel due to for example loading of the sheet of bituminous material, the optical fiber data channel may be provided with fiber gratings. By periodically varying the refractive index along the length of the optical fiber, uniformly spaced regions in the fiber are created where the refractive index has been raised from that of the rest of the core. These variations scatter light by what is called the Bragg effect. When monochromatic light is sent through the data channel, each time the light hits a region of higher refractive index, part of it is scattered backwards. Therefore, an input/output of the data channel can be used both for data input and data output. Only one input/output is needed, and possible other ends of the data channel can be embedded in the sheet of bituminous material.

An input/output simultaneously used for both data input and data output is for example provided with a filter for guiding the input data from a data generator via the input/output into the data channel and for simultaneously guiding output data from the data channel via the input/output towards a data processor. Such filters are known to a skilled person, and can be used with data channels provided with fiber gratings, but for example also with the input output of a data channel with a lasso type of form, having only one end for data input and data output.

The application of fiber gratings is also advantageously for use with data channels with two or more ends. When a sheet of bituminous material is for example provided with a data channel with two ends, each provided with an input/output, and there is a fracture in the channel, data generated at one end can no longer be processed at the other end. However, when the data channel is provided with fiber gratings, the parts of the data channel between the data input/outputs and the fracture can still be used for measuring the condition of the sheet of bituminous material by providing both input/outputs with a data generator and a data processor.

Preferably the data channel 2,3 is substantially anchored in the bitumen via an intermediate. For example a rough coating, or armature wires connecting the data channel 2,3 with the bituminous material can be provided along parts of, or along the entire data channel 2,3 to provide an optimal bonding between the two. Thus, for example the stretching of a sheet 1 of bituminous material is effectively translated to a stretching of, part of, the data channel 2,3.

In yet another embodiment of the invention the sheet 1 of bituminous material is provided with a transducer which translates physical changes within the sheet 1 of bituminous material into dimensional changes of the at least one data channel 2,3. For example, the data channel 2,3 can be wound around a cylindrical body, the so-called transducer, made of a material that expands with a rise in temperature. Because the data channel 2,3 is wound around the body, a small expansion of the transducer results in a relatively large stretching of the data channel 2,3 when the transducer body warms up. The change in length of the data channel 2,3 results in a change in the data propagation characteristic of the data channel 2,3 and can therefore, as explained before, be registered by changes in the data carried by the data channel 2,3. By providing a transducer the sensitivity of the channel 2,3 for specific changes within the sheet of bituminous material is improved by amplifying the effect those changes have on the data channel 2,3.

Also, a force or change in the sheet 1 of bituminous material not fit for causing changes in the data propagation characteristics of channel 2,3, can be translated by a transducer into an entity which does influence the data propagation. For example, a data channel 2,3 inert to humidity can be combined with a transducer that expands when getting moist, thus stretching the data channel and changing its data propagation characteristic.

For covering a maximal distance with a data channel 2,3, the data channel 2,3 can run in the longitudinal direction of an elongated sheet 1, as is shown in figure 1. One data input/output 20,21,30,31 is situated at one side of the sheet 1 and one data input/output 20,21,30,31 is situated at the other side of the sheet 1, the data channel 2,3 running in a straight line between the two sides. This configuration can for example be used to measure forces acting on the entire sheet 1, for example the weight of snow or rainwater pressing down on a sheet 1 applied to a roof.

The data channel 2,3 can also be applied in the sheet 1 of bituminous material in a pattern. As is shown in fig. 3, for example a sinus pattern 11, is possible, for example for covering a large part of the sheet material. The covering of a large part of the sheet material may enhance the chance of registrating a localized pressure, which may for example be useful for the detection of a person walking over the sheet. Also a stepped pattern, a spiral patter, or for example a combined pattern is possible.

The input/output of a data channel 13 can also be located inside the sheet 1, for example for connection with a sensor 15, or can be provided on the surface of the sheet, for example for connection with sensors lying on or only partially embedded within the sheets. It is also possible to loop the data channel 12 within the sheet 1 of bituminous material, providing both input/outputs at the same side, or combining the two ends of the data channel in one, forming a lasso type of data channel 31. Furthermore, a data channel 32 can be provided with branches, enabling for example the processing of data generated by several data generators, and thus of several areas of the sheet, with one data processor.

Both the optimal pattern of the data channel 11-14 and the location the input/output depend on for example the type of changes in the sheet 1 of bituminous material to be measured and/or the type of loading on the sheet 1 of bituminous material to be measured.

Also, depending on the type of measurement to be made with the data channel 2,3, the data channel 2,3 can be situated more towards the middle of the sheet 1 or more towards one of the surfaces. For example, when deformation due to heavy traffic of a sheet 1 of bitumen applied to a concrete base is to be measured, the data channel 2,3 can be situated near the side facing away from the solid underground. However, when deformations in the underground are to be measured the data channels 2,3 are preferably situated near the surface facing towards the underground.

The data channel 2,3 can be used to transport data that provide information about the condition of the bitumen. This information can be analyzed on location, can be transported or transmitted to another location for analyzing, or can be recorded for analyzing afterwards. Therefore the condition of the sheet 1 of bituminous material can be monitored in a save and easy accessible position without someone at risk, or needing laborious inspection rounds, etc. Thus, by using a pro-active approach, via a telemetrical technique and for example a real-time sensing technique, intervention is possible before actual damage has occurred.

By combining the data channel 2,3 and the sheet 1 under controlled conditions during manufacturing, an accurate and reliable positioning of the data channel 2,3 within the sheet 1 can be attained. The placement of for example the data input/output 20,21,30,31 of the channels 2,3 at a constant distance from the surface and the side of sheets 1 can for example facilitate the connecting of the data channels 2,3 of two adjacent sheets 1 of bituminous material. By aligning the two sheets 1, the data input/outputs 20,21,30,31 of the adjacent sheets 1 are automatically aligned with each other.

Also, the bituminous material protects the embedded channels 2,3 during transport and installation, and therefore the risk of damage of the data channels 2,3 is small.

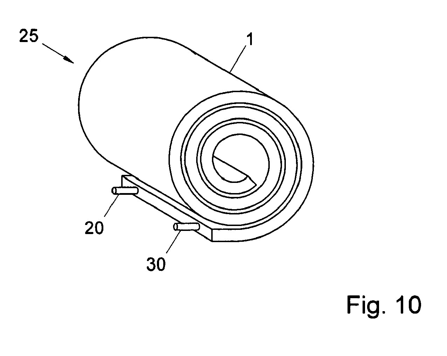

To facilitate transport and storing of the sheets 1 of bituminous material the sheets 1 are preferably provided in roll form, as shown in Fig. 10. By wrapping a sheet 1 in a roll form after fabrication, the large surface area of the sheet 1 is reduced to a compact volume. Therefore, the sheet 1 can easily be transported and stored.

The sheet 1 of bituminous material is preferably made by way of laminating layers of bitumen with layers reinforcement material. In figure 2 a schematic section view of the sheet 1 of figure 1 is shown. The sheet comprises a first layer 8 with the data channels 2,3, laminated with a support layer 9 comprising a carrier 10 of, for example, woven fiber material. The carrier 10 of woven fiber material provides reinforcement against for example rupture of the sheet 1 during transport or storage in roll form. Also, the supporting layer 9 provides extra strength during and after the application of the sheet. For example when used in roofing, the sheet 1 can be subject to high temperatures due to direct sunlight which may cause the bitumen to soften, and therefore to loose strength. As such, a sheet is extra susceptible to damage by forces acting upon it, for example by someone walking over it. The supporting layer 9 provides the sheet 1 with extra strength.

It is observed that the addition of several supporting layers 9 is possible. Also different materials such as woven or non-woven fiber material or metal wire nettings can be used to provide extra strength to the sheet. Further, the layer 8 comprising the data channels 2,3 may also be sandwiched in-between supporting layers 9. Furthermore, the data channel 2,3 can be added to the sheet 1 as part of the reinforcement material 10. For example, the data channel 2,3 can be made part of a sheet of woven fiber material, which sheet can be used as the carrier material 10 in the supporting layer 9, for providing the sheet 1 of bituminous material with extra structural strength.

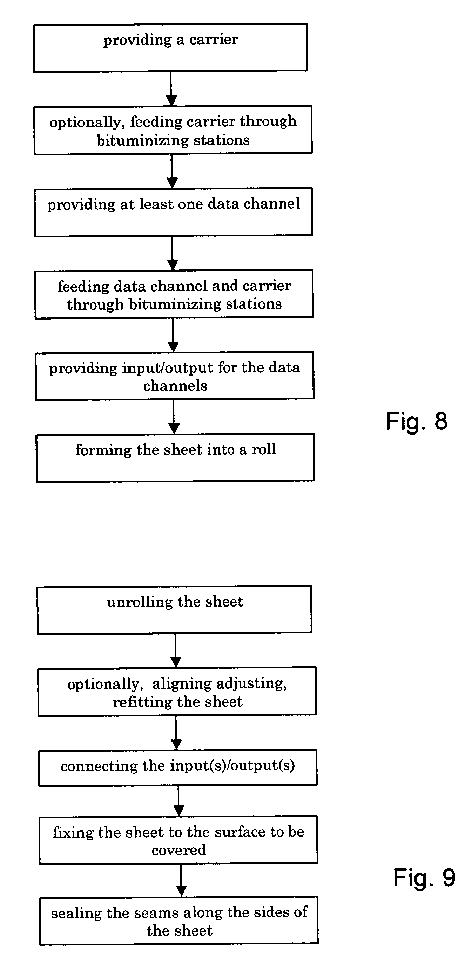

A sheet 1 of bituminous material comprising data channels can be made by the process depicted in Fig. 8. First a carrier 10, for example a glass fiber tissue or metal wire netting, is fed through a bituminizing station comprising molten bitumen, for creating a support layer 9.

One or more data channels 2,3, having at least one end, and at least one of said at least one end is provided with a data input/output, can already be part of the carrier material 10, or can be provided after creating the support layer 9.

In the last case, both the support layer 9 and the data channel 2,3 are fed through respective bituminizing stations for creating a layer 8 of bituminous material comprising at leas part of the data channel 2,3, and supported by the support layer 9. Multiple layers 8,9 may be added to provide a sheet of sufficient strength and thickness, and comprising enough data channels 2,3. Also, for example, a filler such as gravel may be added to the bitumen to provide a more wear resistant surface. The at least one of said at least one end of the data channel 2,3 is provided with an input/output 20,21,30,31 accessible from outside the sheet of bituminous material.

The sheet 1 may be further processed, for example by providing the surface with markings signalling where the data channels run through the sheets, or by providing a self-adhesive layer for facilitating fixing the sheet to a surface to be covered. After preparing at least one side of the sheet 1 of bituminous material with a non adhesive, preferably removable, layer, for example by dressing with talk or in the form of a plastic sheet, such that parts of the bituminous material can not stick together, the sheet 1 can be formed into a roll 25 as shown in Fig. 10.

Preferably, the sheet 1 has an elongated shape, and the data channel 2,3 runs in the longitudinal direction. Thus, the sheet 1 can be produced in a continuous process. The data channel 2,3 can be added to the laminated stream of bitumen and carrier material 10 for example from large bobbins.

A sheet of bituminous material provided in a roll 25 can be applied by a method depicted in Fig. 9.

First the roll of bituminous sheet material is unrolled, preferably over the surface to be covered. The unrolled sheet 1 can then be aligned, adjusted, and possibly refitted by for example bending parts or cutting parts out of the sheet 1 to fit the surface it has to cover. When the input/output 20,21,30,31 of the data channel 2,3 are connected with the appropriate data input/output devices 4,5,6,7 and/or data channels 2,3 in adjacent sheets, the sheet can be fixed to the surface to be covered. For example, heat may be applied by a flame, by hot air or induction, to the side of the sheet to be fixed to the surface, for partially melting the bituminous material. When laid out, the partially molten sheet bonds with the surface it covers, and when the bituminous material cools down again, the sheet is fixed. Alternatively an adhesive can be applied between the surface and the sheet for fixing the sheet, preferably by providing a self-adhesive layer to the underside of the sheet during fabrication of the sheet. Such a layer can be covered by a release film for protecting the layer until the sheet is to be applied.

When the sheet is in place, the seams along the side of the sheet can be sealed. In a further embodiment a coupling element can be used to connect a first data channel 2,3 in a first sheet 1 with a second data channel 2,3 in the first sheet 1 or in a second sheet, the input/output 20,21,30,31 of the first data channel 2,3 not being situated in the direct vicinity of the input/output 20,21,30,31 of the second data channel 2,3. The coupling element may for example comprise a data channel with an input/output at each end, and is preferably situated in-between two adjacent sheets.

The coupling element can also be used to split a data stream from one channel to a plurality of channels, or visa versa, or to connect the data channel with a data generator and/or processor, for example a sensor or a computer. The coupling element may also comprise a sensor for measuring the conditions in-between sheets.

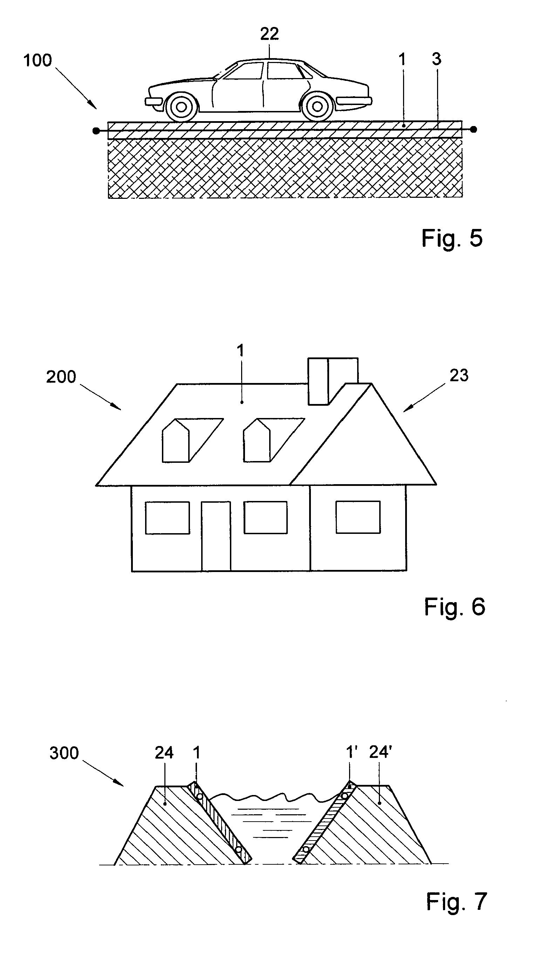

A sheet 1 of bituminous material can be used in a variety of applications, for example as a roofing material 200, shown in Fig. 6. In this way, for example information can be provided about caving in of the roof 23 caused by aging of the structure, subsidence of the building, or due to extreme loading of the roof 23 by for example heavy rain or snowfall. By detecting the humidity of the bituminous material leakages can be detected, and the detection capabilities can also be used to detect people walking over the roof 23, and as such as an anti burglar device.

Alternatively, a sheet of bituminous material can be part of a roof panel for constructing a roof. Such a prefabricated roof panel may for example comprise structural and/or insulating elements to enable the construction of a roof in a short period of time.

Further, a sheet 1 of bituminous material can be used for example as pavement for roads, driveways or parking lots, and the like. Fig. 5 shows a sheet 1 used as pavement 100. By registration of for example the pressure exerted upon the sheet 1, information can be provided about the weight of a car 22, the number of cars passing by, a traffic jam, or a free parking lot. By measuring the temperature of the bituminous material, the risk of slipperiness due to iced rain can be signaled, and by registrating an increase in humidity the risk of aquaplaning due to rain.

Alternatively, a sheet of bituminous material can be part of a prefabricated road surface for constructing a road. Such a prefabricated road surface can be constructed by providing a bituminous sheet with a layer bituminous material comprising granulate, for example gravel. Road markings can already be applied, after which the road surface can be rolled into a roll form for transport. The road surface can be made in for example a factory, it can easily be transported, and in situ it only has to be unrolled. The time needed for, for example, replacing a worn road surface can therefore be reduced, and the time the road has to be closed for traffic minimized.

Also, a sheet 1,1' of bituminous material can be used in a water-control structure 24,24', for example to cover the inside of a basin 300 for collecting rainwater. A section view of a basin 300 provided with sheets 1,1' is shown in Fig. 7. By analyzing the pressure in the sheets 1,1' of bituminous material, for example the height of the water level can be determined, and by providing information about the humidity within the sheet 1,1' of bituminous material near the surface facing the outside of the basin 300, a leakage or overflowing can be signaled. When used in for example dikes, the strength of the waves pounding the dike can be registrated by analyzing the pressure changes in the sheet 1 of bituminous material, or subsidence signaled by an increase in tensile loading of the bituminous material.

As insulating material in for example a landfill, a sheet 1 can be used as a membrane to prevent passage of fluids, such as toxic liquids and/or gasses, for environmental pollution control. The sheet can for example be used for detecting the leaking of chemicals, the buildup of gasses, or for example a rise in temperature by for example chemical reactions.

When applied as for example pavement in a housing area, or in any of the above-mentioned applications, the data channels 2,3 can be used for acquiring and transporting information about the condition of the sheet 1 of bituminous material, and/or its surroundings, as well as for the transport of other information. The data channel 2,3 can for example be used for setting up a data network. Accordingly, the infrastructure of a data network can be provided simultaneously with the application of the sheet 1 of bituminous material. For example, when providing pavement in a housing area, data channels 2,3 for a Wide Area Network (WAN) can be provided simultaneously or data channels 2,3 for a Local Area Network (LAN) can be provided together with a cover of a roof. When used as pavement for freeways, information may be provided via the data channels 2,3 for road signs formed by leds integrated in the road surface.

From the foregoing, it will be clear to the skilled person, that within the framework of invention as set forth in the claims also many variations other than the examples described above are conceivable. For instance, the sheets can be used for insulating tunnels, walls, for covering bridges. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the words 'a' and 'an' shall not be construed as limited to only one', but instead are used to mean 'at least one', and do not exclude a plurality. The mere fact that certain measures are recited in mutually different claims does not indicate that a combination of these measures cannot be used to advantage.

## Claims

1. A sheet of bituminous material (1) for use as a cover, for example as a pavement (100), or as a membrane to prevent passage of fluids, such as a roofing material (200), or as a waterproofing material of a water control-structure (300), said sheet (1) comprising:
at least one data channel (2,3), being at least partially embedded in the bituminous material, said data channel having at least one end, wherein at least one of said at least one end is provided with a data input/output (20,21,30,31).

2. A sheet of bituminous material according to claim 1, wherein at least one of the at least one end of the data channel (13) is embedded within the sheet of bituminous material (1).

3. A sheet of bituminous material according to claim 2, wherein the embedded at least one end of the data channel (13) is provided with a data input/output for connection with a data generator and/or data processor (15) at least partially embedded in the sheet bituminous material (1).

4. A sheet of bituminous material according to any one of the preceding claims, wherein a data generator and/or data processor is integrated with said data channel.

5. A sheet of bituminous material according to any one of the preceding claims, wherein the data channel (2,3) is provided with at least one end provided with a data input/output (20,21,30,31) accessible from outside the sheet of bituminous material (1) for connection with a data input/output of another data channel, a data generator (4,5) and/or a data processor (6,7).

6. A sheet of bituminous material according to any one of the preceding claims, wherein at least one data channel has a data propagation property which depends on a condition within the sheet of bituminous material (1), and, optionally, said sheet of bituminous material (1) further includes a transmission sensor connected to said data channel for determining a change in said data propagation property.

7. A sheet of bituminous material according to claim 6, wherein said sheet of bituminous material (1) further includes at least one transducer which translates a physical change within the sheet of bituminous material into dimensional changes of the at least one data channel.

8. A sheet of bituminous material according to any one of the preceding claims, wherein the at least one data channel comprises optical fibers.

9. A sheet of bituminous material according to claim 8, wherein the at least one data channel is provided with fiber gratings.

10. A sheet of bituminous material according to any one of the preceding claims, wherein the sheet of bituminous material comprises a carrier (10) for reinforcement of the sheet (1).

11. A sheet of bituminous material according to claim 10, wherein the carrier (10) comprises a woven fiber material.

12. A sheet of bituminous material according to claim 10 or 11, wherein the carrier (10) comprises the at least one data channel.

13. A sheet of bituminous material according to any one of the preceding claims, wherein said sheet (1) is provided in roll form (25).

14. A sheet of bituminous material according to any one of the preceding claims, wherein said sheet (1) has an elongated shape, and the at least one data channel (2,3) runs in a longitudinal direction of the sheet (1).

15. A roof (23) provided with a sheet of bituminous material (1) according to any one of the preceding claims.

16. A prefabricated roof panel for constructing a roof, comprising a sheet of bituminous material (1) according to any one of the claims 1-14.

17. A road (100) comprising a sheet of bituminous material (1) according to any one of the claims 1-14.

18. A prefabricated road surface for constructing a road, comprising a sheet of bituminous material (1) according to any one of the claims 1-14.

19. A water control structure (300) provided with a sheet of bituminous material (1) according to any one of the claims 1-14.

20. A method for producing a sheet of bituminous material, said method comprising:
providing a carrier for forming a support layer;
providing at least one data channel, having at least one end,
feeding the carrier and the at least one data channel through respective bituminizing stations for creating a sheet of bituminous material in which said carrier and said data channel are at least partially embedded;
providing at least one of said at least one end of the data channel with a data input/output accessible from outside the sheet of bituminous material; and
forming said sheet into a roll form.

21. A method for implementing a sheet of bituminous material produced according to claim 20, comprising:
unrolling the roll of bituminous sheet material over a surface to be covered,
optionally, aligning, adjusting, and/or refitting the sheet of bituminous material by for example bending parts or cutting parts out of the sheet to fit the surface it has to cover,
connecting the input/output of the data channel with the appropriate data input/output devices, or input/output of another data channel,
fixing the sheet to the surface to be covered by partially melting the bituminous material by heating, or applying an adhesive between the surface and the sheet of bituminous material, and
sealing the seams along the sides of the sheet of bituminous material.
